(19) Europäisches Patentamt / European Patent Office / Office européen des brevets

(11) **EP 4 538 943 A1**

(12) **DEMANDE DE BREVET EUROPEEN**

(43) Date de publication:
**16.04.2025 Bulletin 2025/16**

(21) Numéro de dépôt: **24202608.6**

(22) Date de dépôt: **25.09.2024**

(51) Classification Internationale des Brevets (IPC):
**G06Q 10/063** (2023.01)   **B60L 53/64** (2019.01)
**G06Q 50/06** (2024.01)   **H02J 3/00** (2006.01)
**H02J 7/00** (2006.01)

(52) Classification Coopérative des Brevets (CPC):
**G06Q 10/063; B60L 53/64; G06Q 50/06;
H02J 3/003; H02J 7/0071;** H02J 2203/20

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **09.10.2023 FR 2310782**

(71) Demandeurs:
• **Legrand France
87000 Limoges (FR)**
• **Legrand SNC
87000 Limoges (FR)**

(72) Inventeur: **PREVOST, Philippe
87000 Limoges (FR)**

(74) Mandataire: **Cabinet Camus Lebkiri
25 rue de Maubeuge
75009 Paris (FR)**

(54) **PROCÉDÉ D'OPTIMISATION D'UNE COURBE DE CHARGE D'AU MOINS UN ÉQUIPEMENT ÉLECTRIQUE**

(57) Un aspect de l'invention concerne un procédé (100) d'optimisation d'une courbe de charge d'au moins un équipement électrique. Ce procédé peut être mis en oeuvre par un automate. Le procédé comprend l'obtention (10) de diverses informations et notamment d'une prévision d'une évolution d'émissions de dioxyde de carbone pour une quantité d'électricité consommée et d'une prévision d'une courbe de charge du au moins un équipement électrique. Ainsi, à partir de ces informations, le procédé permet l'identification (60) d'une courbe de charge pour le au moins un équipement électrique ayant un coût inférieur au coût maximal à respecter et minimisant les émissions de dioxyde de carbone, le coût financier ou un indice d'efficience basé sur le coût financier et les émissions de dioxyde de carbone.

[Fig. 2]

FIG. 2

**Description**

## DOMAINE TECHNIQUE DE L'INVENTION

Le domaine technique de l'invention est celui de la domotique et en particulier la domotique assurant la gestion de l'énergie.

La présente invention concerne un procédé d'optimisation des profils de charge d'un ou de plusieurs équipements électriques. La présente invention concerne aussi un automate permettant la mise en oeuvre dudit procédé.

## ARRIERE-PLAN TECHNOLOGIQUE DE L'INVENTION

La domotique est l'ensemble des techniques de l'électronique, de physique du bâtiment, d'automatisme, de l'informatique et des télécommunications utilisées dans les bâtiments, plus ou moins « interopérables » et permettant de contrôler des différents systèmes et sous-systèmes de la maison et de l'entreprise.

La domotique assure des fonctions liées au confort, à la sécurité et à la gestion de l'énergie notamment. Concernant la gestion de l'énergie, il est notamment courant de contrôler les équipements électriques d'un bâtiment afin de réduire la consommation électrique ou le coût financier associé. Il est par exemple connu de programmer la mise en route d'un ballon d'eau chaude à des heures où le prix de l'électricité est réduit.

Les équipements électriques consomment de l'électricité provenant du réseau électrique durant leur fonctionnement et/ou durant leur charge. Certains équipements électriques, tels que le ballon d'eau chaude, la pompe de piscine, la voiture électrique ou tout autre appareil à consommation électrique sont dits « décalables », c'est-à-dire que leur période de consommation peut être décalée dans le temps en limitant les contraintes additionnelles pour les utilisateurs. Une période d'un appareil électrique peut correspondre à une période de fonctionnement de l'appareil électrique et/ou à une période de stockage de l'électricité par l'appareil électrique (i.e. de charge de la batterie de l'appareil électrique par exemple).

La courbe de charge d'un ou des équipements électriques définit l'évolution d'une consommation d'énergie pendant une période, par exemple un jour ou une heure, et donc la puissance électrique consommée pendant cette période par le ou les équipements électriques. Cette courbe de charge peut être estimée et/ou mesurée à intervalles réguliers appelés le pas de temps. Ainsi, optimiser une courbe de charge d'un ou de plusieurs équipements électriques consiste à planifier les périodes de consommation des équipements électriques en vue d'un objectif, par exemple la minimisation de la consommation d'électricité associée. La planification consiste notamment à déterminer une heure de départ d'une période de fonctionnement ainsi que sa durée.

Le réchauffement climatique est en partie dû aux émissions croissantes en dioxyde de carbone (CO2) ou plus généralement équivalent CO2 liées aux activités humaines. Pour lutter contre le réchauffement climatique, les pays du monde entier se sont engagés à réduire leurs émissions de CO2 et/ou d'équivalent CO2 à l'avenir. Par souci de simplicité, les termes « émissions de CO2 » dans la suite de la demande sont utilisés pour les émissions de CO2 et/ou d'équivalent CO2. Ainsi, les acteurs industriels innovent dans différents domaines tels que l'adaptation des bâtiments, par exemple en matière d'isolation thermique, ou la production d'énergies renouvelables. La production d'énergies renouvelables, par exemple l'énergie éolienne ou l'énergie solaire, permet une réduction des émissions de CO2 par rapport aux énergies fossiles notamment. Toutefois, les procédés de production d'énergies renouvelables sont dépendants de la météorologie. Par exemple, l'énergie éolienne est produite seulement lorsqu'il y a du vent. Ainsi, sur le réseau électrique, l'électricité disponible est un mix entre différentes origines telles que l'énergie fossile, nucléaire, éolienne ou solaire.

Les origines de l'électricité disponible sur le réseau, et donc le CO2 émis pour produire cette électricité, varient donc grandement sur une période donnée. Il est maintenant possible de savoir, pour un moment donné et une localisation donnée, l'origine de la production de l'électricité disponible sur le réseau électrique. A partir de ces informations, il est aussi possible d'en déduire l'émission de CO2 par kilowattheure disponible dans une zone donnée. Par exemple, l'entreprise Réseau de Transport Electrique (RTE) met à disposition l'outil « éCO2mix » permettant d'accéder à de telles informations.

Il existe donc un besoin de fournir un procédé d'optimisation d'une courbe de charge d'un ou de plusieurs équipements électriques en vue de réduire la consommation de CO2.

## RESUME DE L'INVENTION

L'invention offre une solution aux problèmes évoqués précédemment en optimisant une courbe de charge d'un ou de plusieurs équipements électriques afin de réduire la consommation d'électricité lorsque la production de l'énergie disponible sur le réseau a engendré une grande émission de CO2.

Un aspect de l'invention concerne un procédé implémenté par un automate d'optimisation d'une courbe de charge d'au moins un équipement électrique comprenant :

- Obtenir, par l'automate, pour la période future :

  - Des périodes de consommation autorisées pour le au moins un équipement électrique,

  - Un coût maximal autorisé pour une consommation d'électricité,

- Une prévision d'une courbe de charge du au moins un équipement électrique,

- Une prévision d'une évolution d'émissions de dioxyde de carbone par quantité d'électricité consommée, et

- Une prévision d'une évolution d'un prix de l'électricité par quantité d'électricité consommée,

- Déterminer un ensemble de courbes de charge pour le au moins un équipement électrique pour la période future en se basant sur les périodes de consommation autorisées pour le au moins un équipement électrique et la prévision de la courbe de charge du au moins un équipement électrique pour la période future obtenues, la détermination de chaque courbe de charge de l'ensemble de courbes de charge étant effectuée en planifiant des périodes de consommation dudit au moins un équipement électrique pour la période future.

- Pour la période future et pour chaque courbe de charge de l'ensemble des courbes de charge :

    - Calculer un premier produit de convolution prenant en entrée ladite chaque courbe de charge du au moins un équipement électrique et la prévision de l'évolution des émissions de dioxyde de carbone pour la quantité d'électricité consommée obtenue et fournissant en sortie un total des émissions de dioxyde de carbone pour la courbe de charge,

    - Calculer un second produit de convolution prenant en entrée ladite chaque courbe de charge du au moins un équipement électrique et la prévision de l'évolution du prix de l'électricité pour la quantité d'électricité consommée obtenue (10) et fournissant en sortie un coût financier total,

- Générer une table associant, pour chaque courbe de charge de l'ensemble des courbes de charges, les émissions de dioxyde de carbone, le coût financier total et un indice d'efficience basé sur le coût financier et les émissions de dioxyde de carbone,

- Identifier, à partir de la table générée, une courbe de charge parmi l'ensemble des courbes de charge, ayant un coût inférieur au coût maximal à respecter et minimisant les émissions de dioxyde de carbone, le coût financier ou un indice d'efficience basé sur le coût financier et les émissions de dioxyde de carbone.

Grâce à l'invention, la courbe de charge des équipements électriques est optimisée en planifiant les périodes de consommation des équipements électriques sur une période déterminée. Cette optimisation permet de réduire les émissions de $CO_2$ liée à la production nécessaire de l'énergie consommée. En effet, la planification favorise les périodes de consommation des appareils électriques lorsque la production de l'électricité disponible sur le réseau électrique a nécessité le moins d'émissions de $CO_2$. Le décalage des périodes de consommation des équipements électriques permet donc d'augmenter les consommations d'électricité sur des périodes durant lesquelles l'électricité produite est la moins émettrice de $CO_2$ sur une période future et de réduire les consommations d'électricité sur des périodes durant lesquelles l'électricité produite est la plus émettrice de $CO_2$ sur une période future.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

- L'ensemble des courbes de charges est en outre déterminé à partir d'une puissance électrique maximale autorisée pour le au moins un équipement électrique.

- L'ensemble des courbes de charges est en outre déterminé en divisant temporellement au moins une des périodes de consommation dudit au moins un équipement électrique.

- La prévision de la courbe de charge pour la période future est obtenue :

    - Par réception, par l'automate, d'au moins une période de consommation souhaitée dudit au moins un équipement électrique pour la période future, et/ou

    - A partir d'au moins une courbe de charge du au moins un équipement électrique pour une période passée.

- Le procédé implémenté en outre par une interface utilisateur connectée à l'automate et comprenant en outre un affichage de :

    - Une planification des périodes de consommation dudit au moins un équipement électrique correspondant à la courbe de charge identifiée, et/ou

    - La courbe de charge identifiée, et/ou

    - Les émissions de dioxyde de carbone et/ou le coût financier et/ou l'indice d'efficience basé sur le coût financier et les émissions de dioxyde de carbone.

- Une mise en oeuvre automatique d'une planification des périodes de consommation dudit au moins un équipement électrique correspondant à la courbe de charge identifiées.

- Une période de consommation d'au moins un équipement électrique parmi le au moins un équipement électrique est initiée par un utilisateur, les étapes du procédé sont effectuées à nouveau en prenant en compte cette période de charge et/ou de fonctionnement de l'équipement électrique.

Un second aspect de l'invention concerne un automate adapté pour la mise en oeuvre du procédé selon l'invention comprenant une carte d'entrée numérique configurée pour recevoir la prévision de l'évolution d'émissions de dioxyde de carbone pour une quantité d'électricité consommée pour la période future.

Un troisième aspect de l'invention concerne un produit programme d'automate comprenant des instructions qui, lorsque le programme est exécuté par un automate, conduisent celui-ci à mettre en oeuvre le procédé selon l'invention.

Un quatrième aspect de l'invention concerne un support d'enregistrement lisible par un automate comprenant des instructions qui, lorsqu'elles sont exécutées par un automate, conduisent celui-ci à mettre en oeuvre le procédé selon l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 est un schéma synoptique illustrant l'enchaînement des étapes d'un procédé selon l'invention.

- La figure 2 montre une représentation graphique d'un ensemble de courbes de charge représenté sous la forme d'une courbe, la courbe étant représentée dans un repère « Coût financier - émissions de CO2 ».

- La figure 3 montre une représentation schématique de l'invention implémentée par un automate 200.

**DESCRIPTION DETAILLEE**

Les figures sont présentées à titre indicatif et nullement limitatif de l'invention.

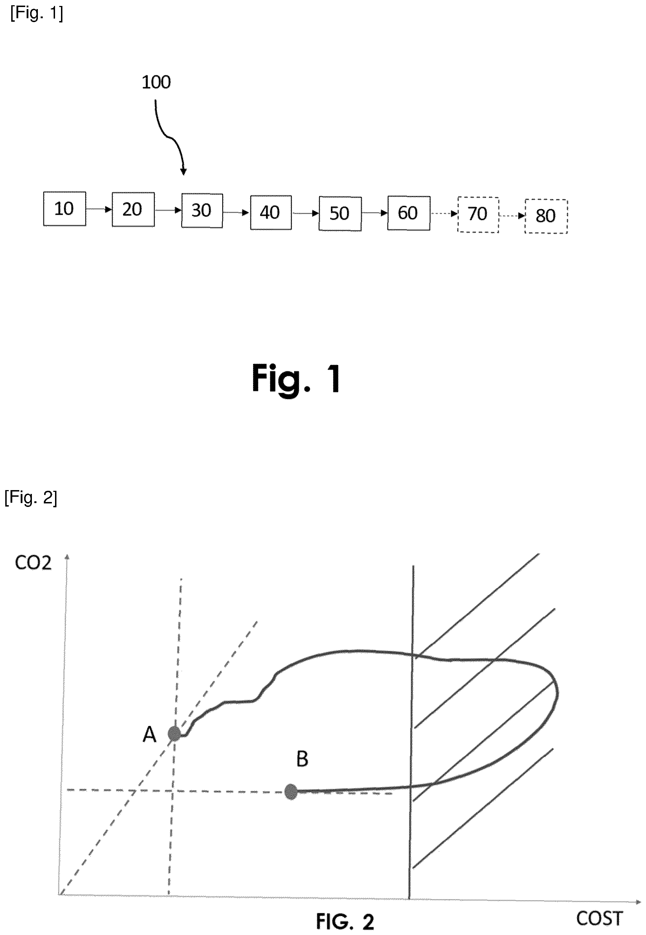

La figure 1 est un schéma synoptique illustrant l'enchaînement des étapes du procédé 100 selon l'invention. L'invention comprend 6 étapes.
Le procédé 100 peut être mis en oeuvre par un automate 200. L'automate 200 est un dispositif reproduisant en autonomie une séquence d'actions sans l'intervention humaine. L'automate est un objet programmé. L'automate 200 reçoit en outre des informations via une connexion, il est donc connecté à une source d'informations. A partir de ces informations, l'automate 200 effectue ensuite des calculs afin de planifier et de mettre en oeuvre une séquence d'actions. Ainsi l'automate 200 permettant la mise en oeuvre du procédé 100 comprend une carte d'entrée numérique configurée pour recevoir diverses informations. La carte d'entrée numérique est notamment configurée pour recevoir et traiter les informations de prévision de l'évolution d'émissions de dioxyde de carbone pour une quantité d'électricité consommée pour une période future. Par « configurer », nous entendons qu'une composante logicielle est spécifiquement dédiée à la tâche de recevoir et traiter ces informations. De plus, l'automate 200 est aussi configuré pour mettre en oeuvre les différentes du procédé 100. Un exemple d'automate est un contacteur. Par « mis en oeuvre par un automate 200 », on entend que les étapes, ou au moins une étape, sont exécutées par au moins un automate 200 ou tout autre système similaire. Ainsi, des étapes sont réalisées par l'automate 200, éventuellement de manière entièrement automatique ou semi-automatique. Dans des exemples, l'invention est mise en oeuvre par un système comprenant un automate 200. Dans ces exemples, le déclenchement d'au moins certaines des étapes du procédé peut être effectué par une interaction de type « utilisateur-système ». Cette interaction peut être effectuée à l'aide d'une interface utilisateur 210 connecté à l'automate 200. Cette interface utilisateur 210 peut être tout objet connecté à l'automate 200 comprenant une interface graphique telle qu'un écran. Un téléphone de type « smartphone » ou un ordinateur peuvent être par exemple utilisé. Dans ces exemples, le procédé est donc mis en oeuvre par un système comprenant un automate 200 et une interface utilisateur 210 permettant des interactions de type « utilisateur-système ». Les informations transmises par l'utilisateur via les interactions avec l'interface 210 sont ensuite transmises à l'automate. Le niveau d'interaction avec l'utilisateur requis peut dépendre du niveau d'automatisme prévu et mis en balance avec la nécessité de mettre en oeuvre les souhaits de l'utilisateur. Dans des exemples, ce niveau peut être défini par l'utilisateur et/ou prédéfini.
Le procédé 100 optimise une courbe de charge d'un ou de plusieurs équipements électriques. Ces équipements électriques sont contrôlés par l'automate 200, c'est-à-dire que l'automate peut démarrer ou arrêter leur fonctionnement et/ou leur charge selon une planification établie. L'établissement de cette planification selon l'invention permet l'optimisation de la courbe de charge de ces équipements électriques pour une période future.

Selon une variante de l'invention, la période future est un jour J ou une période égale à : $J + X_h$ avec J, un jour calendaire et $X_h$ un nombre d'heures compris entre *[-23,168]*. Selon une autre variante de l'invention, compatible avec la variante précédente, le début de chaque période peut varier. Par exemple, pour une période d'une durée égale à : $J + X_h$, le début de chaque période peut être décalé d'un nombre d'heures compris entre [-24,24].. La période future peut être divisée en sous-périodes, appelées « pas de mesure ». Chaque pas de mesure peut durer une heure. Selon une autre variante de l'invention, compatible avec la variante précédente, la période future est comprise entre 2 et 7 jours et chaque pas de mesure est une heure ou un jour.

Le procédé 100 comprend une première étape 10 d'obtention, par exemple par réception, de données par l'automate. Les données peuvent être envoyées par un serveur distant et reçues par l'automate 200 ou fournies à l'automate 200 par un utilisateur via une interface utilisateur 210. Cinq types de données sont obtenues à l'étape 10.

Le premier type de données obtenues à l'étape 10 est les périodes de consommation autorisées 11 pour les équipements électriques pour la période future. Ces périodes de consommation autorisées peuvent être fournies par un utilisateur à l'automate 200 via l'interface utilisateur 210 par exemple. Les périodes de consommation autorisés d'un équipement électrique peuvent être égales ou supérieures à la durée minimale de consommation de cet équipement électrique. Par exemple, pour la charge d'une voiture électrique, il est possible de spécifier que la période de charge autorisée est comprise entre 20 heures et 7 heures. Ainsi, pour une voiture électrique ayant une période de charge minimale égale à 7 heures, le procédé 100 pourra planifier la charge de la voiture selon un grand nombre de combinaisons comme par exemple de 20 heures à 4 heures, ou de minuit à 7 heures ou encore de 20h à minuit puis de 3h à 6h, si la période de charge minimale est divisible. Dans un exemple, les périodes de consommation peuvent être envoyés par un utilisateur.

Le second type de données obtenues à l'étape 10 est le coût maximal 12 autorisé pour une consommation d'électricité pour la période future. Ce coût maximal peut être fourni par un utilisateur à l'automate 200 de la même manière que les périodes de fonctionnement autorisées 11. Ce coût maximal peut aussi être obtenu à partir d'un coût moyen pour une consommation d'électricité pour une période passée. Par exemple, la période passée peut être une année, un mois, une semaine ou un jour. A partir, de ce coût moyen, un surcoût autorisé, par exemple exprimé en un pourcentage du coût moyen, peut être fourni par l'utilisateur à l'automate de la même manière que les périodes de fonctionnement autorisées 11. Dans un exemple, le coût maximal peut être envoyé par un utilisateur.

Le troisième type de données obtenues à l'étape 10 est la prévision d'une courbe de charge 13 du au moins un équipement électrique pour la période future. Cette prévision d'une courbe de charge peut être effectuée pour chaque équipement électrique du au moins un équipement électrique. Cette prévision comprend par exemple la durée et l'évolution de la consommation d'énergie durant une période de consommation pour chaque appareil électrique. De plus, suivant les équipements électriques, les courbes de charge peuvent être constantes, comme pour les périodes de fonctionnement d'une pompe de piscine, ou évoluer au cours du temps, comme pour les périodes de fonctionnement d'un lave-linge. Ensuite à partir de ces différentes courbes de charge, il est possible d'obtenir une prévision de la courbe de charge pour le ou les équipements électriques pour la période future dont la courbe de charge est optimisée avec le procédé 100 en additionnant la courbe de charge de chacun des appareils électriques. L'addition des courbes de charge consiste, pour chaque pas de mesure de la période future, à additionner la consommation électrique prévue pour chacun des appareils électriques afin d'obtenir la consommation électrique totale prévue pour le au moins un appareil électrique.

Selon une variante de l'invention, compatible avec les variantes précédentes, la prévision de la courbe de charge 13 du au moins un équipement électrique pour la période future est obtenue par réception, par l'automate, d'au moins une période de consommation souhaitée du ou des équipements électriques pour la période future. Par exemple, l'utilisateur peut fournir la période de consommation souhaitée ainsi que la consommation électrique et/ou la puissance nécessaire pour les ou les équipements électriques à l'aide de l'interface utilisateur 210. Ainsi, il est possible pour chaque pas de mesure de la période future, de prévoir la consommation électrique pour le ou les équipements électriques.

Selon une variante de l'invention, compatible avec les variantes précédentes, la prévision de la courbe de charge 13 du au moins un équipement électrique pour la période future est obtenue à partir d'au moins une courbe de charge du au moins un équipement électrique pour une période passée. La détermination de la courbe de charge du ou des équipements électriques pour une période passée peut être effectuée par apprentissage. Par exemple, pour une période passée d'un mois ou d'une année, l'apprentissage permet de déterminer la courbe de charge de la période de charge d'un véhicule électrique ou d'un ballon d'eau chaude. L'apprentissage permet par exemple d'identifier la durée minimale, moyenne et/ou maximum de la période de charge ainsi que l'évolution de la consommation électrique durant cette durée. Elle permet aussi d'identifier la puissance maximale atteinte durant cette durée. A partir de ces données apprises, il est donc possible d'effectuer une prévision de la courbe de charge du au moins un équipement électrique pour la période future pour la période future.

Le quatrième type de données obtenues à l'étape 10 est la prévision d'une évolution d'émissions de CO2 pour une quantité d'électricité consommée 14 pour la période future. Cette prévision peut être envoyée par un serveur distant et reçue par l'automate. Cette prévision peut aussi être fournie par l'utilisateur via l'interface utilisateur 210. Cette prévision permet, pour chaque pas de mesure de la période future, d'estimer la quantité de CO2 qui sera émise pour une quantité d'électricité, par exemple un kilowattheure (kwh) disponible sur le réseau électrique. Ainsi, lorsqu'un ou des équipements électriques consomment cette électricité disponible sur le réseau électrique, la quantité de CO2 émise pour fournir cette électricité est considérée comme étant la quantité de CO2 émise par l'électricité consommée par le ou les équipements électriques. Ainsi, l'invention ne vise pas à réduire la quantité CO2 émise directement par les équipements électriques lors de leur fonctionnement et/ou de leur charge mais à optimiser leur courbe de charge pour que la quantité CO2 émise pour fournir l'électricité nécessaire à leur fonctionnement et/ou leur charge soit réduite. Par exemple, si une partie de l'électricité disponible sur le réseau est fournie par un panneau solaire, cette électricité fournie par le panneau solaire peut être considérée comme n'émettant pas de CO2. Ainsi, en fonction de l'ensoleillement prévu pour la période future, la prévision des émissions de CO2 évoluera.

Le cinquième type de données obtenues à l'étape 10 est la prévision d'une évolution d'un prix de l'électricité pour une quantité d'électricité consommée 15 pour la période future. Cette prévision peut être envoyée par un serveur distant et reçue par l'automate. Cette prévision peut aussi être fournie par l'utilisateur via l'interface utilisateur 210. Cette prévision permet pour chaque pas de mesure, de connaître le prix d'un kwh. Par exemple, si une partie de l'électricité disponible sur le réseau est fournie par un panneau solaire, cette électricité fournie par le panneau solaire peut être considérée comme étant gratuite. Ainsi, en fonction de l'ensoleillement prévu pour la période future, la prévision du prix de l'électricité évoluera.

Dans un exemple, un sixième type de données peut être obtenu à l'étape 10. Ces données sont des données liées à une priorisation entre les au moins un équipement électrique. Par exemple, ces données peuvent comprendre une liste ordonnée du au moins un équipement électrique en fonction de leur priorité. Ainsi plus un équipement électrique est considéré comme prioritaire, plus le respect de sa période de consommation autorisée sera privilégié dans les étapes suivantes du procédé.

Le procédé 100 comprend une seconde étape 20 de détermination d'un ensemble de courbes de charge pour le au moins un équipement électrique pour la période future. Cette détermination se base sur les périodes de consommation autorisées et la prévision de la courbe de charge du au moins un équipement électrique obtenues à l'étape 10. Ainsi, toutes les combinaisons possibles de planification des périodes de consommation pour le ou les équipements électriques durant les périodes de consommation autorisées sont déterminées. Il est par exemple possible d'autoriser des périodes de consommation qui débutent avant la période future et/ou qui terminent après la période future. Dans cet exemple, il est possible de ne considérer que les périodes de consommation dont la majorité de la période de consommation est comprise dans la période future.

Selon une variante de l'invention, compatible avec les variantes précédentes, la détermination 20 de l'ensemble de courbes de charge pour le au moins un équipement électrique pour la période future se base aussi sur une puissance électrique maximale autorisée pour le au moins un équipement électrique. Dans cette variante, cette puissance électrique maximale autorisée peut être obtenue par l'automate durant l'étape 10. Elle peut par exemple être fournie par l'utilisateur via l'interface utilisateur 210. Elle peut aussi être envoyée par un serveur distant à l'automate 200. Enfin, elle peut être apprise sur une période passée, par exemple en identifiant la puissance électrique maximale atteinte sur cette période passée. En tenant compte de la puissance électrique maximale autorisée, l'ensemble des courbes de charge déterminé permet une planification des périodes de fonctionnement et/ de charge du ou des équipements électriques avec une puissance électrique maximale à tout instant de la période future inférieure ou égale à la puissance maximale autorisée. Par exemple, si la courbe de charge issue d'une planification dans laquelle tous les équipements électriques fonctionnent en même temps ne respecte pas la puissance maximale autorisée alors cette courbe de charge ne sera pas conservée lors de cette étape 20.

Selon une variante de l'invention, compatible avec les variantes précédentes, la détermination 20 de l'ensemble des courbes de charge est effectué en divisant temporellement au moins une des périodes de consommation du ou des équipements électriques. Dans cette variante, les périodes de consommation autorisées 11 pour le au moins un équipement électrique obtenues à l'étape 10 comprennent des données sur les divisions temporelles possibles pour le ou les équipements électriques. Par exemple, la charge d'une voiture électrique peut être divisée avec une période minimale d'une demi-heure alors que la période de fonctionnement d'un lave-vaisselle ne peut être divisée. En divisant temporellement au moins une des périodes de consommation du ou des équipements électriques, l'ensemble des courbes de charge déterminé est encore plus important et permet donc une meilleure optimisation de la courbe de charge du ou des équipements électriques.

Le procédé 100 comprend une troisième étape 30 de calcul, pour la période future et pour chaque courbe de charge de l'ensemble des courbes de charge, d'un premier produit de convolution prenant en entrée ladite chaque courbe de charge du au moins un équipement électrique et la prévision de l'évolution des émissions de CO2 pour la quantité d'électricité consommée obtenue à l'étape 10 et fournissant en sortie un total des émissions de dioxyde de carbone pour la courbe de charge. Plus précisément, pour chaque courbe de charge de l'ensemble des courbes de charge utilisé comme premier terme, le premier produit de convolution est calculé en utilisant comme second terme du produit la prévision de l'évolution des émissions de CO2 pour la quantité d'électricité consommée. La fonction obtenue par le produit de convolution correspond donc à l'évolution des émissions de CO2 durant la période future pour la courbe de charge utilisée comme premier terme du produit de convolution. A partir de cette fonction, il est possible de calculer les émissions totales de CO2 pour la période future en calculant l'intégrale de cette fonction pour la période future.

Le procédé 100 comprend une quatrième étape 40 de calcul, pour la période future et pour chaque courbe de charge de l'ensemble des courbes de charge, d'un second produit de convolution prenant en entrée ladite chaque courbe de charge du au moins un équipement électrique et la prévision de l'évolution du prix de l'électricité pour la quantité d'électricité consommée obtenue à l'étape 10 et fournissant en sortie un coût financier total. Plus précisément, pour chaque courbe de charge de l'ensemble des courbes de charge utilisé comme premier terme, le second produit de convolution est calculé en utilisant comme second terme du produit la prévision de l'évolution du prix de l'électricité pour la quantité d'électricité consommée. La fonction obtenue par le produit de convolution correspond donc à l'évolution du coût durant la période future pour la courbe de charge utilisée comme premier terme du produit de convolution. A partir de cette fonction, il est possible de calculer le coût total pour la période future en calculant l'intégrale de cette fonction pour la période future.

Le procédé 100 comprend une cinquième étape 50 de génération d'une table associant, pour chaque courbe de charge de l'ensemble des courbes de charges déterminé 20, les émissions de CO2, le coût financier total et un indice d'efficience basé sur le coût financier et les émissions de dioxyde de carbone. Dans un premier exemple, dans un objectif principal de minimiser les émissions de CO2, l'indice d'efficience peut être calculé à partir du nombre de grammes d'émissions de dioxyde de carbone CO2 émis par unité monétaire dépensée. Dans ce premier exemple, l'indice d'efficience augmente lorsque le nombre de grammes d'émissions de dioxyde de carbone CO2 par unité monétaire dépensée diminue. Dans un second exemple, dans un objectif principal de minimiser le coût financier, l'indice d'efficience peut être calculé à partir du nombre d'unités monétaires dépensées par gramme d'émissions de dioxyde de carbone CO2. Dans, un troisième exemple, l'indice d'efficience $I$ d'une courbe de charge est égal à :

$$I = \sqrt{((C - C_{min})^2 + (CO2 - CO2_{min})^2)}$$

Avec :

- $\sqrt{}$, une racine carrée,

- $C$, le coût financier total de la courbe de charge,

- $C_{min}$, le coût financier total de la courbe de charge parmi l'ensemble des courbes de charge minimisant le coût financier total,

- $CO2$, les émissions de CO2 de la courbe de charge,

- $CO2_{min}$, les émissions de CO2 de la courbe de charge parmi l'ensemble des courbes de charge minimisant les émissions de CO2.

La table générée peut par exemple comprendre un nombre de lignes égal au nombre de courbes de charges de l'ensemble des courbes de charges et un nombre de colonnes égal à trois : la première colonne contenant les valeurs des émissions de dioxyde de carbone, la seconde colonne contenant les valeurs du coût financier total et la troisième colonne contenant les valeurs de l'indice d'efficience basé sur le coût financier et les émissions de dioxyde de carbone. La table peut être classée en fonction du pas de mesure de démarrage d'une période de consommation d'un ou de plusieurs équipements électriques. Par exemple, si une première courbe de charge est obtenue en planifiant la période de consommation d'un ou de plusieurs équipements électriques à 10h et qu'une seconde courbe de charge est obtenue en planifiant la période de consommation d'un ou de plusieurs équipements électriques à 11h, alors la première courbe de charge sera placée avant la seconde courbe de charge dans la table. Il est aussi possible de classer les courbes par ordre croissant ou décroissant de l'une de ces trois valeurs : les émissions de dioxyde de carbone, le coût financier total et l'indice d'efficience basé sur le coût financier et les émissions de dioxyde de carbone. De manière optionnelle, la table peut comprendre une quatrième colonne contenant les valeurs de puissance maximale atteinte pour chaque courbe de charge.

A partir de cette table, il est possible d'obtenir une représentation graphique telle que celle illustrée à la figure 2. Ainsi, la figure 2 montre une représentation graphique d'un ensemble de courbes de charge représenté sous la forme d'une courbe dans un repère « Coût financier - émissions de CO2 ». Dit autrement, la figure 2 montre une représentation graphique de l'impact d'un horaire sur le coût financier et sur les émissions de CO2. Le point A sur la figure 2 est le point de la courbe représentant la courbe de charge minimisant le coût financier total ainsi que l'indice d'efficience. Le point B sur la figure 2 est le point de la courbe représentant la courbe de charge minimisant les émissions de CO2. La zone hachurée de la figure 2 débute pour une valeur de coût maximal à respecter. Ainsi, la partie de la courbe traversant cette zone hachurée n'est pas considérée durant l'étape 60.

Le procédé 100 comprend une sixième étape 60 d'identification, à partir de la table générée à l'étape 50, d'une courbe de charge 61 parmi l'ensemble des courbes de charge, ayant un coût inférieur au coût maximal à respecter et minimisant les émissions de dioxyde de carbone, le coût financier ou l'indice d'efficience basé sur le coût financier et les émissions de dioxyde de carbone.

Selon une variante de l'invention, compatible avec les variantes précédentes, le procédé 100 comprend une septième étape 70 optionnelle d'affichage d'informations sur l'interface utilisateur 210. Les informations affichées peuvent être :

- La planification des périodes de consommation du ou des équipements électriques correspondant à la courbe de charge identifiée à l'étape 60, et/ou

- La courbe de charge identifiée, et/ou

- Les émissions de dioxyde de carbone et/ou le coût financier et/ou l'indice d'efficience basé sur le coût financier et les émissions de dioxyde de carbone.

Ces informations peuvent être affichées conjointement ou successivement. L'utilisateur est donc informé des différentes périodes de consommation de chacun des équipements électriques et vérifier que cela lui convient.

Selon une variante de l'invention, compatible avec la variante précédente, les informations correspondant à plusieurs courbes de charges peuvent être affichées. La courbe de charge identifiée à l'étape 60 est incluse parmi les courbes de charge affichées. Les informations affichées dans cette variante peuvent être : la planification des périodes de consommation du ou des équipements électriques correspondant aux courbes de charge, et/ou les courbes de charge, et/ou les émissions de dioxyde de carbone et/ou le coût financier et/ou l'indice d'efficience basé sur le coût financier et les émissions de dioxyde de carbone. Les différentes courbes de charge affichées peuvent être identifiées lors d'une étape optionnelle effectuée entre les étapes 60 et 70. Dans un premier exemple, cette étape optionnelle identifie un nombre prédéterminé, par exemple 2, 3 ou 10, de courbes de charges minimisant le critère utilisé à l'étape 60. Dans un autre exemple, cette étape optionnelle identifie la ou les courbes de charges minimisant les deux autres critères non utilisés à l'étape 60. Ces informations peuvent être affichées conjointement ou successivement. L'utilisateur est donc informé des différentes périodes de consommation de chacun des équipements électriques pour plusieurs courbes de charge possibles. Il peut ainsi décider celle qui lui convient en la sélectionnant via l'interface utilisateur 210. Sans sélection de la part de l'utilisateur, la courbe de charge identifiée à l'étape 60 est sélectionnée par défaut.

Selon une variante de l'invention, compatible avec les variantes précédentes, le procédé 100 comprend une étape 80 optionnelle de mise en oeuvre automatique de la planification 81 des périodes de consommation dudit au moins un équipement électrique correspondant à la courbe de charge identifiée 60. Cette étape peut être effectuée après l'étape 60 ou après l'étape optionnelle 70. Par « mise en oeuvre automatique », nous entendons que la mise en oeuvre est effectuée par l'automate sans intervention d'un utilisateur.

Selon une variante de l'invention, compatible avec les variantes précédentes, le procédé 100 est interrompu par une mise en route manuelle, c'est-à-dire effectuée par un utilisateur, d'une période de charge et/ou de fonctionnement d'un équipement électrique. Dans ce cas, le procédé 100 est relancé automatiquement. Ainsi, les étapes 10 à 60, ainsi qu'éventuellement les étapes optionnelles 70 et 80, sont réeffectuées en tenant compte de la période de charge et/ou de fonctionnement du ou des équipements électriques que l'utilisateur a mis en route manuellement.

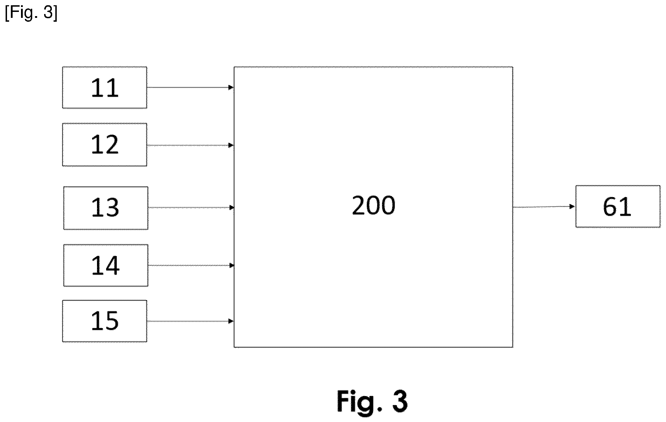

La figure 3 montre une représentation schématique de l'invention implémentée par un automate 200. Ainsi, l'automate reçoit à l'étape 10, des périodes de consommation autorisées 11, un coût maximal 12 autorisé pour une consommation d'électricité, une prévision d'une courbe de charge 13 du au moins un équipement électrique, une prévision d'une évolution d'émissions de dioxyde de carbone pour une quantité d'électricité consommée 14, et une prévision d'une évolution d'un prix de l'électricité pour une quantité d'électricité consommée 15. Enfin, l'automate 200 met en oeuvre les étapes 20 à 60 et fournit en sortie une courbe de charge 61 parmi l'ensemble des courbes de charge, ayant un coût inférieur au coût maximal à respecter et minimisant les émissions de dioxyde de carbone, le coût financier ou un indice d'efficience basé sur le coût financier et les émissions de dioxyde de carbone.

Sauf précision contraire, un même élément apparaissant sur des figures différentes présente une référence unique.

## Revendications

1. Procédé (100), implémenté par un automate (200) et par une interface utilisateur (210) connectée à l'automate, d'optimisation d'une courbe de charge d'au moins un équipement électrique comprenant :

   - Obtenir (10), par l'automate (200), pour la période future :

     ○ Des périodes de consommation autorisées (11) pour le au moins un équipement électrique,

∘ Un coût maximal (12) autorisé pour une consommation d'électricité,

∘ Une prévision d'une courbe de charge (13) du au moins un équipement électrique,

∘ Une prévision d'une évolution d'émissions de dioxyde de carbone par quantité d'électricité consommée (14), et

∘ Une prévision d'une évolution d'un prix de l'électricité par quantité d'électricité consommée (15),

- Déterminer (20) un ensemble de courbes de charge pour le au moins un équipement électrique pour la période future en se basant sur les périodes de consommation autorisées (11) pour le au moins un équipement électrique et la prévision de la courbe de charge (13) du au moins un équipement électrique pour la période future obtenues (10), la détermination de chaque courbe de charge de l'ensemble de courbes de charge étant effectuée en planifiant des périodes de consommation dudit au moins un équipement électrique pour la période future.

- Pour la période future et pour chaque courbe de charge de l'ensemble des courbes de charge :

∘ Calculer (30) un premier produit de convolution prenant en entrée ladite chaque courbe de charge du au moins un équipement électrique et la prévision de l'évolution des émissions de dioxyde de carbone pour la quantité d'électricité consommée obtenue (10) et fournissant en sortie un total des émissions de dioxyde de carbone pour la courbe de charge

o Calculer (40) un second produit de convolution prenant en entrée ladite chaque courbe de charge du au moins un équipement électrique et la prévision de l'évolution du prix de l'électricité pour la quantité d'électricité consommée obtenue (10) et fournissant en sortie un coût financier total

- Générer (50) une table associant, pour chaque courbe de charge de l'ensemble des courbes de charges, les émissions de dioxyde de carbone le coût financier total et un indice d'efficience basé sur le coût financier et les émissions de dioxyde de carbone,

- Identifier (60), à partir de la table générée (50), une courbe de charge (61) parmi l'ensemble des courbes de charge, ayant un coût inférieur au coût maximal à respecter et minimisant les émissions de dioxyde de carbone, le coût financier ou un indice d'efficience basé sur le coût financier et les émissions de dioxyde de carbone, et

- Afficher (70) :

∘ Une planification des périodes de consommation dudit au moins un équipement électrique correspondant à la courbe de charge identifiée (60), et/ou

∘ La courbe de charge identifiée (60), et/ou

∘ Les émissions de dioxyde de carbone et/ou le coût financier et/ou l'indice d'efficience basé sur le coût financier et les émissions de dioxyde de carbone.

2. Procédé selon la revendication 1 dans lequel l'ensemble des courbes de charges est en outre déterminé (20) à partir d'une puissance électrique maximale autorisée pour le au moins un équipement électrique.

3. Procédé selon l'une quelconque des revendications précédentes dans lequel l'ensemble des courbes de charges est en outre déterminé (20) en divisant temporellement au moins une des périodes de consommation dudit au moins un équipement électrique.

4. Procédé selon l'une quelconque des revendications précédentes dans lequel la prévision de la courbe de charge pour la période future est obtenue (10) ° :

- Par réception, par l'automate (200), d'au moins une période de consommation souhaitée dudit au moins un équipement électrique pour la période future, et/ou

- A partir d'au moins une courbe de charge du au moins un équipement électrique pour une période passée.

5. Procédé selon l'une quelconque des revendications précédentes comprenant en outre une mise en oeuvre (80) automatique d'une planification (81) des périodes de consommation dudit au moins un équipement électrique correspondant à la courbe de charge identifiée (60).

6. Procédé selon l'une quelconque des revendications précédentes dans lequel lorsqu'une période de consommation d'au moins un équipement électrique parmi le au moins un équipement électrique est initiée par un utilisateur, les étapes du procédé sont effectuées à nouveau en prenant en compte cette période de charge et/ou de fonctionnement de l'équipement électrique.

7. Automate (200) adapté pour la mise en oeuvre du procédé selon l'une quelconque des revendications précédentes comprenant une carte d'entrée numérique configurée pour recevoir la prévision de l'évolution d'émissions de dioxyde de carbone pour une quantité d'électricité consommée pour la période future.

8. Produit programme d'automate (200) comprenant des instructions qui, lorsque le programme est exécuté par un automate, conduisent celui-ci à mettre en oeuvre le procédé selon l'une quelconque des revendications 1 à 6.

9. Support d'enregistrement lisible par un automate (200) comprenant des instructions qui, lorsqu'elles sont exécutées par un automate, conduisent celui-ci à mettre en oeuvre le procédé selon l'une quelconque des revendications 1 à 6.

[Fig. 1]

Fig. 1

[Fig. 2]

FIG. 2

[Fig. 3]

Fig. 3

**EP 4 538 943 A1**

Europäisches
Patentamt

European
Patent Office

Office européen
des brevets

# RAPPORT DE RECHERCHE EUROPEENNE

Numéro de la demande

EP 24 20 2608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SALVADOR ACHA ET AL: "Optimal charging strategies of electric vehicles in the UK power market", INNOVATIVE SMART GRID TECHNOLOGIES (ISGT), 2011 IEEE PES, IEEE, 17 janvier 2011 (2011-01-17), pages 1-8, XP031860944, DOI: 10.1109/ISGT.2011.5759128 ISBN: 978-1-61284-218-9 * abrégé * * page 2, colonne de droite, ligne 1 - ligne 34 * ----- | 1-9 | INV. G06Q10/063 B60L53/64 G06Q50/06 H02J3/00 H02J7/00 |

**DOMAINES TECHNIQUES RECHERCHES (IPC)**

G06Q
B60L
H02J

Le présent rapport a été établi pour toutes les revendications

| Lieu de la recherche | Date d'achèvement de la recherche | Examinateur |
|---|---|---|
| Munich | 15 janvier 2025 | Chauvet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)